# EUROPEAN PATENT APPLICATION

(11) **EP 4 821 675 A1**
(43) Date of publication of application: **14.10.2026**
(21) Application number: 25170159.5
(22) Date of filing: 11.04.2025
(51) Int. Cl.: B32B 5/02, B32B 5/26, H01M 50/282

(54) **A FLAME PROTECTION SHIELD OR PLATE FOR A BATTERY ELECTRIC VEHICLE**

(71) Applicant: Autoneum Management AG, 8406 Winterthur (CH)
(72) Inventor: van Adrichem Geisseler, Johanna, 8200 Schaffhausen (CH); Sinne, Yannik, 48317 Drensteinfurt (DE); Burnett, Eric Christoph, 48703 Stadtlohn (DE)

(57) **Abstract**

Flame protection shield or plate for battery electric vehicles, characterized in that the shield comprises at least one lower and one upper fibrous inlay comprising inorganic fibrous material and a fibrous inlay core comprising a mechanically bonded nonwoven layer of carbon fibers placed between the upper and lower fibrous inlay, and whereby the core inlay layer and the upper and lower inlay layers are embedded within the same thermoset matrix material, such that the flame protection shield forms a single plate material, and whereby the shield further comprises a coating on at least cut edges such that the carbon fibers are sealed off.

## Description

### Technical Field

The invention is directed to a flame protection shield or plate in particularly against battery thermal runaway events and an automotive structural part comprising such a flame protection shield or plate, and a method of producing the flame protection shield or plate.

### Background

Pure electric driven vehicles are relying for their power on a battery system comprising multiple batteries placed in an enclosure. The enclosure, for instance in the form of a box, case, pack or housing may be placed underneath the vehicle, in most cases underneath the passenger compartment. The same or similar type of storage is also used to keep batteries for storing electricity generated by power plants like sun panels or wind energy generators. Also, hybrid vehicle solutions are increasing the battery size to obtain an electrical driven radius that is sufficient for at least urban driving.

These batteries may be lithium ion-based batteries. If these batteries are maltreated, like electrical overloading or mechanical damage, it may trigger an internal cell temperature rise. Above a temperature of 120°C the internal barrier between the chemical liquid compartments in the cell is degrading, this will further increase the temperature due to a chemical reaction within the cell. If the temperature reaches around 260°C this battery will go in thermal runaway, with a temperature step change to 800°C or above, combined with a jet fire shooting out of the cell vent, and hot particle ejecta.

Thermal runaway event, both in static storage facilities, and in a battery housing of a car, is an event to be avoided but in case it occurs extreme measures are needed to reduce the effect, in particularly to allow people sufficient time to react and safely distance themselves from a thermal runaway event.

In general, all batteries may be placed with their vent in one direction with at least a flame protection shield facing these vents. Standard flame shields alone cannot withstand a thermal runaway event, as they will be perforated within a few seconds, they might work as thermal barriers between battery cells or modules but will not be able to withstand the jet fire and particle ejecta when faced head on. There is a need for a flame protection shield or plate that can withstand a thermal runaway in particular with an abrading jet fire. For the sake of simplicity, we will call this type of shield a flame protection shield or plate.

Flame protection shields or plates, as used in the current description is meant to be a flame protection, that can withstand a thermal runaway event directed against its surface comprising jet fire and hot particle ejecta coming out of the cell for a given period as defined by the car makers. The flame protection shield might be used close to or opposite battery cell venting areas. However, it might be used for the main traction battery as well as for the smaller batteries incorporated within the vehicle. The vehicle might be any form of transport on the road, preferably passenger cars, light weight commercial vehicles and trucks, comprising one or more batteries.

Current state-of-the-art flame protection shields used are based on a mica layer. However, running a pyrotest shows that a mica shield will perforate already after 8 seconds exposure for a 1 mm thickness and 13 s for a 2 mm thickness. Such mica plates are a dense material which can only be optimised by increasing in thickness. While the overall space for a shield is limited. Current mica plates are at their border of optimisation as an increase of thickness is not given in the current battery housing structures, while the material is dense and will increase the weight of the overall battery including the housing considerable. Furthermore, mica plates cannot be formed in intricate shapes to cover curved or shapes surfaces or corners.

Mica has also the problem of sourcing, as it is based on a mined material the impact on the environment may pose additional problems, while in certain mining districts ethical mining standards may not be given.

There is a need for alternative flame protection shields, that can withstand thermal runaway directed close to or against their surface comparable to the current mica shields, without the need for a large packing space as the overall space in a battery housing is limited. The alternative flame protection shield is preferably lighter than the current solution, can fit in a small packaging space, can be moulded in any shape and is tuneable depending on the requirements for a specific battery housing design. It is the goal to provide for such an improved flame protection shield.

### Summary of the invention

The object of the invention is achieved by a flame protection shield or plate, whereby the shield or plate comprises at least one lower and one upper fibrous inlay comprising inorganic fibrous material and a fibrous inlay core comprising a mechanically bonded nonwoven layer of carbon fibers placed between the upper and lower fibrous inlay, and whereby the core inlay layer and the upper and lower inlay layers are embedded within the same thermoset matrix material, such that the flame protection shield forms a single plate material, further comprising a coating applied to at least cut edges such that the carbon fibers are sealed off.

Surprisingly, by using a mechanically bonded nonwoven layer of carbon fibers it is possible to maintain integrity of the flame protection shield when subjected to an abrasive jet flame at the end phase of a thermal runaway event of a battery for a battery electric vehicle more than the time required in the standard pyro test.

Surprisingly, the combination of a mechanically bonded nonwoven of carbon fibers increases the durability of a thermal runaway directed against their surface, to equal or better the performance of mica shields of the prior art in this scenario. Surprisingly, the combination of fibrous outer layers together with a mechanically bonded carbon fiber layer as well as all layers impregnated with the matrix, would show a synergistic effect, compared to the layers used on their own.

By introducing carbon fibers within a battery casing with surrounding metal elements, the risk of increased corrosion is introduced. In particular when the two materials may get into electrical contact with each other. This may occur if they directly touch each other, but it may also happen if they are connected by a metal fastener, electrolyte or a wire.

Advantageously, the flame shield according to the invention after moulding and cutting the edges is further comprising a coating applied to the cut edges such that the carbon fibers are sealed off material during production of the part thereby isolating the carbon fiber and preventing the risk of corrosion of surrounding metal parts, like neighbouring walls and or fasteners by galvanic corrosion.

Preferably the flame protection shield or plate according to the invention subjected to a pyro-test as defined in the disclosure will not show a perforation before 13s exposure, preferably not before 15s exposure, preferably not before 20s exposure.

The core layer, sandwiched between the two inorganic fibrous cover layers is a mechanical bonded layer of carbon fibers.

Carbon fibres used in the part according to the invention include those produced by carbonising various organic materials, e.g. cotton wool, lignin, or regenerated cellulose, but particularly to a fibre of a synthetic resinous material such as polyacrylonitrile. Carbonised polyacrylonitrile fibre may include carbonised fibers based on co-polymers or terpolymers of acrylonitrile with other monomers, e.g. methyl methacrylate or vinyl acetate, either alone or to which have been added polymers compatible with them such as phenolic resins or Friedel-Crafts condensates.

Carbonization is the thermal process whereby stabilized (oxidized) PAN or pitch fibers are heated to a temperature of 1200 - 1500°C, in order to develop the ultimate strength and modulus of the fibers.

Carbonization is carried out with small stepwise heating rates (which implies longer residence times), while pyrolysis is usually carried out with fast heating rates (sometimes reaching the maximum temperature in a single step change, requiring short residence times).

The carbon fibers used may be sized, whereby a polymeric coating was added to the carbon fibers in order to improve handling and processing. In particularly a sizing may be used to increase compatibility between reinforcing fibers and crosslinked binding system used. These carbon fibers are preferably comprising of carbonized oxidized organic fibers, preferably polyacrylonitrile (PAN)-based carbon fibers. Optionally they may be treated on the surface to further enhance their performance during a runaway event.

Preferably the carbon fibers are recycled carbon fibers, obtained from cut offs of endless filament materials, like unused filament rovings, carbon fibre textile cutoffs, or the like. These may come from other industries with similar requirements like airplane or aerospace applications. Preferably the recycled carbon fibers comprise at least 80% of PAN-based carbon recycled fibers.

The fiber fineness of the carbon fibers is preferably in the range less than or equal to 1 dtex. The length of the carbon fibers is preferably in the range between 30 mm and 80 mm.

The carbon fiber layer is mechanical bonded, for instance by needling, knitting, weaving, braiding or stitch bonding. The mechanical binding of the carbon fiber core layer enhances the abrasive resistance and may enhance the eruption barrier effect, withstanding the power of a jet flame against the surface of the layer. It was found that a mechanically bonded carbon fiber layer worked better than just a laid fibrous or endless filament nonwoven layer. During an abrading fiber event loosely laid fibers or filaments could be pushed away or moved aside by the flame pressure, thereby negating the flame protecting properties of the carbon fibre within the flame protection shield. In case of a mechanically bonded layer this becomes more durable, causing a delay in the time to perforation and preventing the flame pressure from creating an opening in the carbon fiber network.

Preferably, a mechanical bonded mat or felt of carbon fibers may be achieved with a needle felt layer, whereby the needling is enough to obtain an entangled web of fibers, whereby the entangling as well as the increased fiber friction together may increase the exposure time before a perforation occurs.

Surprisingly, not the use of carbon fibers alone, but the use of carbon fibers in a mechanical bonded mat or felt was increasing the resistance of the layer against a thermal runaway event, hence increasing the exposure time before a perforation.

Furthermore, the use of the mechanical bonded layer of carbon fibers, rather than mixing the carbon fibers into the glass fibers or other fibre type reinforcements, increased the exposure time of the overall trim part.

Preferably, the core fibrous bonded nonwoven layer comprising carbon fibers has an area weight of at least 100 gsm (grams per square meter), preferable an area weight between 100 and 600 gsm.

Hence the outer layers will not only increase the exposure time before a perforation during a thermal runaway but also decrease a possible electric short cut. Preferably the two outer fibrous layers comprises inorganic fibers with a melting temperature above 800°C, preferably above 1200°C.

Preferably, the two outer layers comprises any one of glass fibers, aramid fibers, silica fibers, basalt fibers, boron fibers and or ceramic fibers, for instance silicon carbide-based fibers or a mixture of such fibers, more preferably glass fibers. The fibers may be in any form, but preferably a glass fiber mat, for instance by a carded cross-lapped needle process, or an airlaid process preferably mechanically bound or bound by an additional matrix, preferably between 1-4% by weight of fibers, more preferably between 1-2% by weight of fibers, is sufficient to enhance the features of the flame protection shield, the two outer fibrous cover layers may comprise a fibrous mat of cut inorganic fibers. Alternatively, the cover layers may be formed by any one of weave, knit, continuous filament mat or non-crimp fabric or other forms or glass filament laid layers.

The outer fibrous layers may be laid in a mat or fibrous layer, either as a chopped strand mat or a continuous filament mat, eventually lightly bonded for ease of handling and transport. Preferably the fibrous outer layers are bonded with a matrix, preferably an emulsion matrix based on polyvinyl alcohol or polyvinyl acetate.

The fibrous outer layers preferably comprise fibers with a staple length between 30 mm and 70 mm.

Preferably the two outer fibrous inlay layers on each side of the core inlay layer have an area weight per layer of at least 300 gsm, preferably at least 450 gsm. Preferably between 300 gsm and 800gsm, more preferably between 300 gsm and 600 gsm. Preferably glass fiber layers with such a preferred area weight are used.

The area weight of the mat is limited towards the high weights by the space available for the full flame shield or plate. This is in most cases less than 5 mm for all layers.

Surprisingly, it was found that the total area weight of the outer layer is influencing the pyrotest results. Preferably the total amount of fibers in the two outer layer is at least 900 gsm, preferably at least 1800 gsm. Preferably, the two outer fibrous layers are equal in weight and/or material.

The flame protection shield is moulded in its final thickness and shape, while impregnated with the matrix to substantially fill all voids in all layers thereby binding the layers together.

Preferably the shield has a thickness of between 0.7 and 6 mm, preferably of between 1.0 and 3 mm. The thickness may vary over the surface of the part and is dependent on the final design of the battery casing as well as the functions added.

Preferably, the full stack of layers is impregnated with a cross-linked matrix, preferably a rigid polyurethane. The matrix may be applied as a foam to enable penetration and spreading of the matrix throughout the layers. Upon impregnation under pressure the material is densified and most of the cellular structure of the foam is collapsed to form a dense plate.

The matrix as such may have an effect on the flammability of the flame or fire but does not have a significant effect on the exposure time before a perforation of the actual thermal runaway. However, the matrix is preferred in the initial phase of a thermal event with the battery cell before a thermal runaway as well as it enables the production and installation in the battery case without losing fibers, which might cause other problems during the use of the batteries.

The polyurethane according to the invention is typically obtained from the reaction of a polyurethane forming mixture comprising polyol and isocyanate, which may be premixed just before application. The polyurethane forming mixture generally used in the process of the present invention will include: at least one polyol component with an average OH number of 300 to 900, the individual polyols having a functionality of 2 to 6; at least one isocyanate, preferably at least one of an isomer blend of methylene diphenyl diisocyanate (MDI), polymeric MDI, or prepolymers thereof; optionally a blowing agent, preferably water; one or more catalysts including amine-based and metal-based catalysts; surfactants or stabilizers; mould release agent and additives such as fillers, colorants, or rheology modifiers. Suitable polyols can be polyester, or polyether based.

Alternatively, a thermoset matrix is used to impregnate the layers before moulding into the final shape, preferably a matrix based on polyurethane, polyamide, unsaturated polyester, phenolic, epoxy or silicon. Preferably a flame retardant is used in the binding system to reduce the risk of fire traveling via the binding system to neighbouring battery cells thereby enhancing the overall speed of the event. This may be even more important if the car was in an accident, where there is a risk, the car ends up on its side.

Preferably at least 15 %, preferably between 20 and 40 % by weight based on the full flame protection shield is the matrix, whereby the matrix can be any of the mentioned above.

The flame protection shield or plate comprising at least 3 layers, with two outer inorganic fibrous cover layers, and a core layer comprising mechanically bonded carbon fibers impregnated with a matrix are compression moulded in preferably plates or sheets or as directly in a 3-Dimensional shape to enable a good covering of battery cells, the thus produced part may be cut to the final shape and or to create openings or cut offs. The thus produced shield or plates further comprises a coating on at least cut edges such that the carbon fibers are sealed off.

The flame protection shield further comprises at least one passage opening and or cut out to accommodate a connecting element, which is provided in order to secure the structure component to a vehicle body, whereby at least the passage opening is coated such that the carbon fibers are sealed off.

The coating is preferably a non-conductive thermoplastic or thermoset coating, preferably one of a polyurethane based coating, more preferably a cross-linked, thermoset polyurethane-based coating, a silicon-based coating, an acryl based coating, a unsaturated polyester based coating, preferably a polymer or a copolymer of a terephthalate based coating, preferably based on silyl modified polymers (SMPs) or epoxy based or phenol based or melamine based resin coating.

The coating may further comprise additives like anti flammability additives, hardener, fillers and or stabilisers.

Depending on the coating used the thickness may vary between 10µm and 2000 µm.

The flame protection shield according to the invention may be used in an automotive structural part comprising a carrier layer. The flame protection shield may be applied to at least part of the surface of the carrier layer by mounting or bonding to its surface, for instance by using mechanical means for mounting or by using an adhesive layer between the flame protection shield and the adjacent surface of the carrier layer.

The adhesive may be based on the same materials as used for the coating, preferably a polyurethane based adhesive, preferably a thermoplastic polyurethane TPU based, a silicon-based adhesive, an acryl-based adhesive, silyl modified polymers (SMPs) based adhesive, an epoxy or phenolic based adhesive or an adhesive based on melamine resin. The adhesive system used may be a 1K or 2 K system. Whereby the adhesive is first applied and dried and only during mounting is reactivated to obtain its full strength and hardens or cures.

In a preferred embodiment, the flame protection shield, according to the invention, or the automotive structural part including the flame protection shield according to the invention is placed opposite the vent opening of the battery cells with the flame shield facing the vent openings.

Additional gas-guiding elements may be added to the design of the flame shield or plate shape and or the carrier layer or added as additional elements to the carrier layer, preferably in the form of at least partial channels, domes, or blocking elements. It was found that the closed construction of the flame protection shield was able to guide gas from the battery cells to venting systems in the casing. This may occur during normal usage of the batteries or at the onset of a thermal runaway, whereby in an initial phase the battery cell is producing gas.

To further enhance the function of the flame protection shield, plate and or the gas guiding, the shield may further comprise at least one area with a sealing and or gasket. The seal or gasket may be either of permanent or non-permanent nature. A permanent nature would enhance the quality of a possible sealing or gasket, however in case a replacement of single battery cells may be an option, a non-permanent seal or gasket enables opening and closing of the battery case and an easy access of the batteries within. Preferably the seal or gasket adheres to adjacent material to form a bond. This bond can be to both sides or just one side of the opening to be sealed.

The seal or casket may be based on butyl, polyurethane, silyl modified polymers (SMPs), epoxy or phenolic type materials.

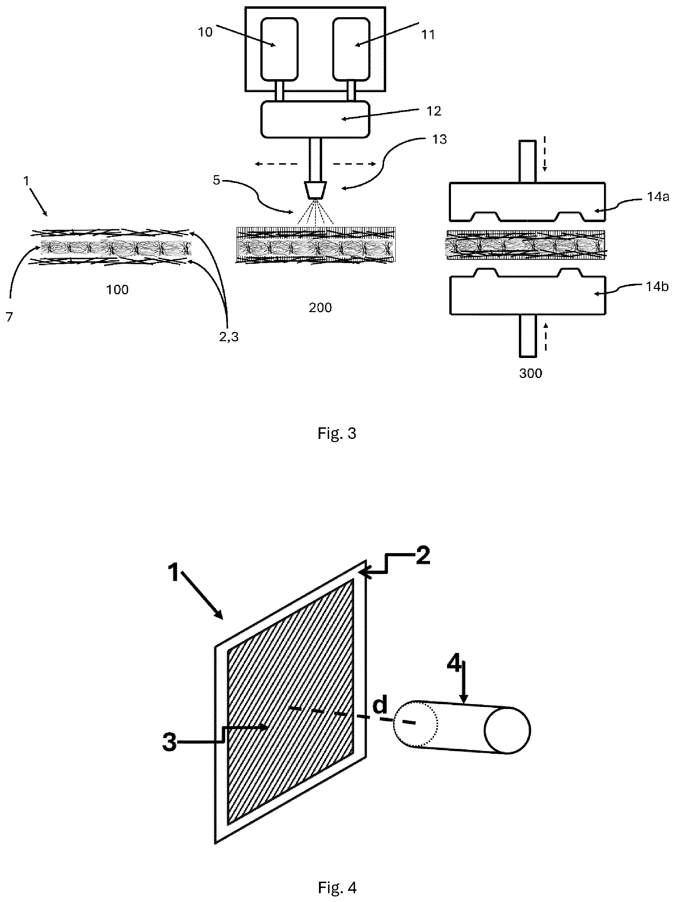

For the pyro test (1) a test plate of the material (3) was placed in a metal holding frame (2). A pyrotechnical body (4) WECO CE 0589-T1-0025, (stage firework Volcano with Net explosive quantity (NEQ) 245 g, at least 20 s burning time and a height when burned without constrains of 7 m. The firework specification is of the type >1200°C), was placed with the fire direction towards the test plate, at a distance (d) of 30 mm from the middle of the plate to the tip of the pyrotechnical body (number in brackets see figure 4 of setup,). The pyrotechnical body was ignited with a remote control giving a signal to an electric igniter. The whole process was filmed and the time until perforation was measured based on the filmed document. In addition, the increase in temperature was measured with an infrared camera at the centre of the back surface of the panel throughout the full test duration.

This test is accepted by the car manufacturers as a simulation of a thermal runaway event at the extreme case whereby not only high temperatures are achieved, but also the additional effect of propelling gas, particles and debris is measurable. A material is passed if at the end of the burning, the material is unperforated. This would be a passing time of at least 20 s.

A flame protection shield according to the invention can be part of a battery casing for traction batteries for an electric vehicle, either while placed in a vehicle or later in life when used as an electrical storage system. Such a battery storage may comprise at least one battery cell with a battery venting opening, further comprising at least one flame protection shield or plate according to the invention, placed adjacent and opposite of a battery cell facing the battery venting opening such that at least a jet blast of a thermal runaway event will hit the flame protection shield. Preferably the flame protection shield is opposite of the venting opening such that the jet blast will be directed substantially perpendicular to the surface of the flame protection shield such that the surface affected is minimal reducing the effects of abrasion over a larger surface.

Battery storage for traction batteries comprising at least one flame protection shield according to the invention, whereby the flame protection shield is moulded in a 3-dimensional shape such that any gas emission of a battery cell is guided to a vent opening either in the shield and or in the battery storage housing.

Battery storage for traction batteries comprising at least one flame protection shield according to one of the preceding claims, further comprising a seal between the flame protection shield and at least part of the battery storage such that no hot gas can escape between the flame protection shield, and the battery storage adjacent the backside of the flame protection shield.

Method of producing a Flame protection shield or plate according to the invention with at least the steps of
- providing the stacked layout of the inorganic fibrous inlays for the outer inert fibrous layers and a mechanically bonded nonwoven layer of carbon fibers sandwiched between the outer layers, as the fibrous inlay of the core layer.
- applying the matrix to the thus stacked layout and
- compression moulding the thus formed stack to the preferred thickness and or shape to form the flame protection shield or plate such that the fibers within the layer are bonded to neighbouring fibers and the layers are bonded face to face to the adjacent layer and whereby the pores between the fibers are substantially filled with matrix to form a substantially closed shield or plate; and
- cutting the thus formed heat shield or plate; and
- coating at least the edges with exposed carbon fibers to seal the carbon fibers off.

In a preferred solution the full flame protection shield or plate is coated after the cutting process, to seal the cut edges and to obtain an addition coat on the full part. In particularly by adding flame retardants to the coating a further flame protection can be achieved, not only against the latest stage of a thermal run-away event but also during earlier stages of a fire in close proximity of the flame protection shield. In particularly, reducing the risk of an open fire by spreading flames.

Preferably in the method as just described, the core fibrous layer comprising carbon fibers is obtained by the process step, whereby carbon fibers are laid to a fibrous web by means of a carding process, the thus laid web is cross lapped in at least more than 1-ply and subsequently mechanical bonded, preferably by needling.

The automotive structural part may be produced by mounting at least one heat protection shield or plate according to the invention to a carrier layer.

### Drawings

Figure 1 Schematic layout of the Flame protection shield or plate according to the invention
Figure 2 Schematic layout of the Flame protection shield or plate according to the invention in an alternative version.
Figure 3 Schematic layout of the Flame protection shield or plate according to the invention comparable to figure 2, including an opening.
Figure 3 set up of the pyro-test

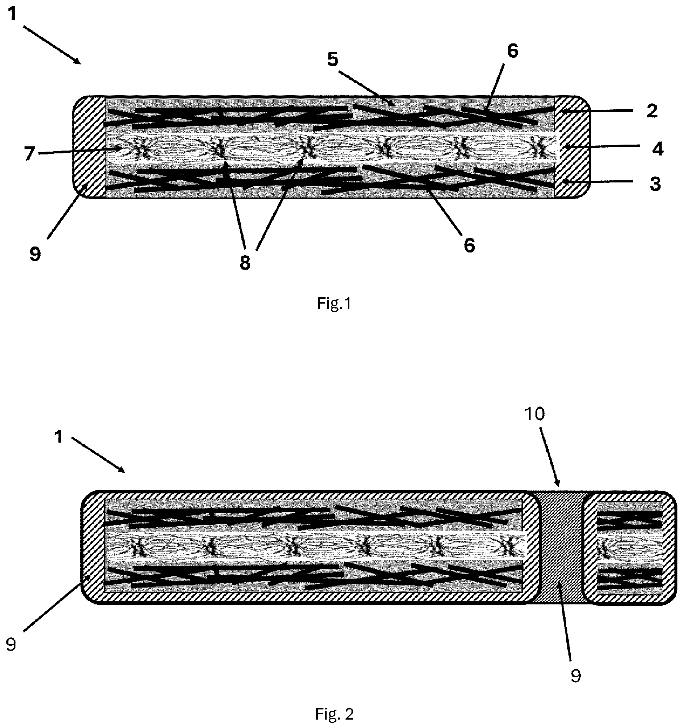

Figure 1 - 3 are showing a Flame protection shield or plate 1 with a first and second cover layer 2, 3 and a core layer 4. Whereby the first and second cover layer comprises inlays of inorganic fibers 6, preferably glass fibers. The core layer comprises a fibrous inlay of a mechanical consolidated nonwoven of carbon fibers 7, for instance by needling as shown schematically at 8. Both the inorganic fiber inlays 6 of the cover layers 2,3 as well as fibrous inlay of the core layer 7 are embedded in the same matrix 5. The matrix is applied on the surface of either or both of the cover layers and extended within all layers for instance by compression moulding. Hence forming an integral 3-layer material that cannot be separated in its layers after moulding and hardening or curing of the matrix material.

Flame protection shields thus produced may be cut in plates by for instance laser cutting. This will give clean cut plates but will expose the carbon fibers at the cutting edges. To prevent this the flame protection shield or plate according to the invention is at least at the cutting edges coated with preferably a nonconductive coating 9 according to the invention, thereby sealing off the carbon fibers of the core layer. Also cutting edges in openings may be coated locally to further reduce any corrosion risk. This is in particularly important in case any metal bolts or other metal appliances are passing through the opening.

Figure 2 is showing an alternative embodiment whereby not only the edges, but the full panel or shield is coated with a nonconductive coating, this has the additional advantage that slight surface blemishes and open pores may be closed in addition to obtain a full watertight part, further eliminating the risk of any corrosion induced by a galvanic reaction with the carbon fibers. This also has the advantage that certain flame retardants may be used in the coating, that otherwise would interfere with the forming and/or curing of the matrix material.

Figure 3 is a showing the same case as figure 2 including an opening. Also cutting edges in openings may be coated to further reduce any corrosion risk. This is in particularly important in case any metal boults or other metal appliances are passing through the opening.

Figure 3 is showing a possible process for making the flame shields or plates according to the invention with the step 100 of layering the fibrous inlays for the different layers, in particular the inorganic fibrous inlay for the first and second cover layer and the mechanically consolidated carbon fiber layer for the core. Hence, the carbon fiber layer is sandwiched between the inorganic fibrous covering inlays. All layers are preferably equal in length.

Preferably to prevent movement of the layers during the next production steps the layers may be bound for instance by stitching to the adjacent layers or through the full stack of layers. Alternatively, a thermoplastic binding or a mechanical holding for preventing the layers from slipping during the next steps may be applied. The binding may be temporarily.

In a second step 200 the thus formed stack of fibrous layers is impregnated with the matrix resin, for instance with a PU mixture, whereby mixtures of isocyanate and polyol are mixed in a mixing head and evenly sprayed on the fibrous layers. Any one of the mixtures might include further additives necessary for the PU to form and to obtain the required properties for the matrix.

While the thus sprayed PU mixture will start reacting the impregnated stack is transferred to a compression mould, whereby both mould halves together form the final shape of the part or the plate to be produced 300. During compression moulding the resin mixture is pressed by the action of the moulds to fill substantially all voids within the fibrous layers. Compression moulded may be done in shaped moulds or bigger flat plates may be formed. An alternative compression moulding process, for instance a continuous process may be used, in particularly, if flat plates with equal thickness are the preferred form.

After moulding and preferably after hardening or curing the thus formed flame protection shield plates or parts may be subjected to a cutting step to cut the plate in the required size and shape as well as cut out any required openings or cut outs. Cutting may be done with a rotary tool, but preferably with a laser cutting tool (step not shown).

Unfortunately, after cutting the carbon fibers of the core layer are exposed at the cutting edges, posing a possible problem for corrosion when placed close or against metal objects or surfaces. Hence at least the edges known to come into contact with or close to metal surfaces may be coated with a nonconducting coating such that the carbon fibers are sealed off against any contact.

The coating may be done in a dipping process or applied locally, by for instance a spray or paint process. Figure 1 shows a more local application of only the cut edges, while the embodiments of figures 2 and 3 are more feasible with a dipping or spraying process.

Alternatively, the coating may be done with an in-mould coating process during step 300.

Surprisingly, by sealing off the cutting edges at least the cutting edge of the carbon fibers any possible corrosive reaction can be eliminated. This is important as the shields may be used in a close battery box comprising different metal surfaces prone to corrosion reactions. Furthermore, the coating applied may be based on the same class of materials as the matrix, thereby guaranteeing a good adhesion between the materials.

Additives may be added to the coating to further enhance the performance of the part, for instance flame retardants may be added to at least the coating, to further reduce the flammability of the part, but also graphite may be added.

The matrix is preferably chosen such that after compression moulding and hardening and or curing the flame protection shield or plate is substantially closed, in the sense of in principle airtight. While the coating added in a second step may further close and seal the surface.

Surprisingly it was found that using a coating to close cut edges on the shields or plates enhances the flame resistance during the first stage of a thermal runaway or in a flame test.

The thickness of the flame protection shield or plate may be variable. The thickness may vary to an increased thickness in the area of possible jet flame contact, while it may be thinner in areas where mounting or other appliances are in contact. Alternatively, the change of thickness may be due to formed guiding walls for possible gas guiding just before and during a thermal runaway event.

Preferably the flame protection shield or plate may be produced in flat plates, using the same or a similar process whereby also peripheral regions are provided according to the invention as claimed. These plates can be used to clad any construction that needs additional flame protection, in particular in situations of a possible jet flame with abrasive particles may be expected in a thermal run-away situation.

Figure 3 is showing the pyro test (1) set up whereby a test plate of the material to be tested (3) is placed in a metal holding frame (2). A pyrotechnical body (4) WECO CE 0589-T1-0025, (stage firework Volcano with Net explosive quantity (NEQ) 245 g, at least 20 s burning time and a height when burned without constrains of 7m. The firework specification is of the type >1200°C), was placed with the fire direction towards the test plate, at a distance (d) of 30 mm from the middle of the plate to the tip of the pyrotechnical body (number in brackets see figure 1 of setup,). The pyrotechnical body was ignited with a remote control giving a signal to an electric igniter. The whole process was filmed and the time until perforation was measured based on the filmed document.

This test is accepted by the car manufacturers as a simulation of a thermal runaway event at the extreme case whereby not only high temperatures are achieved, but also the additional effect of propelling gas, particles and debris is measurable.

An example of the flame protection shield or plate according to the invention was measured and compared to reference materials as well as the material layers alone.

## Claims

1. Flame protection shield or plate for battery electric vehicles, **characterized in that** the flame protection shield comprises at least one lower and one upper fibrous inlay comprising inorganic fibrous material and a fibrous inlay core comprising a mechanically bonded nonwoven layer of carbon fibers placed between the upper and lower fibrous inlay, and whereby the core inlay layer and the upper and lower inlay layers are embedded within the same thermoset matrix material, such that the flame protection shield forms a single plate material., and whereby the shield further comprises a coating on at least cut edges such that the carbon fibers are sealed off.

2. Flame protection shield or plate according to one of the preceding claims, whereby the Flame protection shield or plate further comprises at least one passage opening and or cut out to accommodate a connecting element, which is provided in order to secure the structure component to a vehicle body, whereby at least the passage opening comprises a coating such that the carbon fibers are sealed off.

3. Flame protection shield or plate according to claim 1 or 2, the coating is a non-conductive thermoplastic or thermoset coating, preferably one of a polyurethane based coating, more preferably a cross-linked, thermoset polyurethane-based coating, a silicon-based coating, an acryl based coating, a unsaturated polyester based coating, preferably a polymer or a copolymer of a terephthalate based coating, preferably based on silyl modified polymers (SMPs) or epoxy based or phenol based or melamine based resin coating.

4. Flame protection shield or plate according to one of the preceding claims whereby the coating further comprises additives for at least one of a flame retardant, hardener, filler, stabilisers.

5. Flame protection shield or plate according to one of the preceding claims, whereby the carbon fibers are comprised of carbonized oxidized organic fibers, preferably polyacrylonitrile (PAN)-based carbon fibers.

6. Flame protection shield or plate according to one of the preceding claims, whereby the carbon fibers are recycled carbon fibers, preferably comprising at least 80% of PAN-based carbon recycled fibers.

7. Flame protection shield or plate according to one of the preceding claims, whereby the matrix is a thermoset resin, preferably a matrix based on polyurethane, polyamide, unsaturated polyester, phenolic, epoxy or silicon.

8. Flame protection shield or plate according to one of the preceding claims, whereby the cover layers are comprising inorganic fibers of at least one of glass fibers, aramid fibers, silica fibers, basalt fibers, boron fibers and or ceramic fibers, for instance silicon-carbide based fibers, or a mixture thereof.

9. Automotive structural part comprising a carrier layer and at least one flame protection shield or plate according to one of the preceding claims.

10. Automotive structural part according to claim 9, further comprising gas guiding elements either formed in the flame shield and or the carrier layer or as additional elements.

11. Automotive trim part according to claim 9 or 10, whereby the carrier layer is at least one of an injection moulded thermoplastic layer, a sheet moulding compound layer, glass matrix reinforced thermoplastic (GMT) based layer, preferably including unidirectional glass tapes and or plane fabric, a metal layer, preferably an aluminum layer or a steel layer.

12. Automotive trim part according to one of the preceding claims used as an underbody, under engine shield, cable protection shield, a battery protection shield, a lid for a battery casing or an impact protection shield, or as a cladding in a truck passenger cabin, or as a flame protection integrated in the flooring of the passenger cabin.

13. Method of producing a flame protection shield or plate according to the invention with at least the steps of
- providing the stacked layout of the inorganic fibrous inlays for the outer inert fibrous layers and a mechanically bonded nonwoven layer of carbon fibers sandwiched between the outer layers, as the fibrous inlay of the core layer.
- applying the matrix to the thus stacked layout and
- compression moulding the thus formed stack to the preferred thickness and or shape to form the flame protection shield or plate such that the fibers within the layer are bonded to neighboring fibers and the layers are bonded face to face to the adjacent layer and whereby the pores between the fibers are substantially filled with matrix to form a substantially closed shield; and
- cutting the thus formed heat shield or plate; and
- coating at least the edges with exposed carbon fibers to seal the carbon fibers off.

14. Method of producing an automotive structural part according to one of the preceding claims by mounting at least a heat protection shield or plate as produced by claim 13 to a carrier layer.
